# EUROPEAN PATENT APPLICATION

(11) **EP 1 515 266 A1**
(43) Date of publication of application: **16.03.2005**
(21) Application number: 03736196.1
(22) Date of filing: 13.06.2003
(51) Int. Cl.: G06K 17/00, G06F 17/60

(54) **CARD ISSUING SYSTEM AND CARD ISSUING METHOD**

(30) Priority: 14.06.2002 JP 2002174991
(71) Applicant: JCB Co., Ltd., Tokyo 107-8686 (JP)
(72) Inventor: KAWAMOTO, Masayoshi, JCB Co., Ltd., Tokyo 107-8686 (JP); IRIYAMA, Hiroshige, JCB Co., Ltd., Systems Dept., Tokyo 107-8686 (JP); MATSUYAMA, Hisanori, JCB Co., Ltd., Tokyo 107-8686 (JP)
(74) Representative: Senior, Alan Murray
(86) International application number: PCT/JP2003/007560
(87) International publication number: WO 2003/107263

(57) **Abstract**

Security of an IC card containing customer's personal information is secured and the IC card is issued in real time even in bases of a card company in any security environments. A card issuing center 1 has a center communication means 11 for transmitting customer's card writing data to a base 2, and the base 2 has a card communication mediate means 211 for receiving the card writing data from the center communication means 11 and transmitting the card writing data directly to an IC card medium 23 connected to a terminal 21 without storing the data writing data in the terminal 21 of the base 2.

## Description

### TECHNICAL FIELD

The present invention relates to a card issuing system and a card issuing method that secure security of IC cards containing personal information and issue the IC cards in real time even in bases of card companies in any security environments.

### BACKGROUND ART

In recent years, IC cards have become widespread. IC cards are cards where specific information and personal information such as card numbers, and application programs according to card applications are written into built-in integrated circuits. The IC cards can be used for various applications such as credit cards, points reward cards and fare prepaid cards used in transportation facilities. Since the information written on IC cards are encrypted, it is more difficult to counterfeit the IC cards than the magnetic cards and plastic cards, and thus there is an advantage that security of specific information and personal information is secured.

Conventionally, a process for issuing IC cards in card companies and the like is mainly executed in card issuing centers of the card companies in the improved security environment because specific information and personal information need to be written on IC cards. In this case, however, time and transport costs are required until IC cards are issued to customers, and care should be taken also of the security at the time of the transport.

Japanese Patent Laid-Open Publication No. 2001-266076 discloses a system in which IC cards are, therefore, issued in business bases of the card company in various places, and the time required for application for cards from customers to issuing of the cards is shortened.

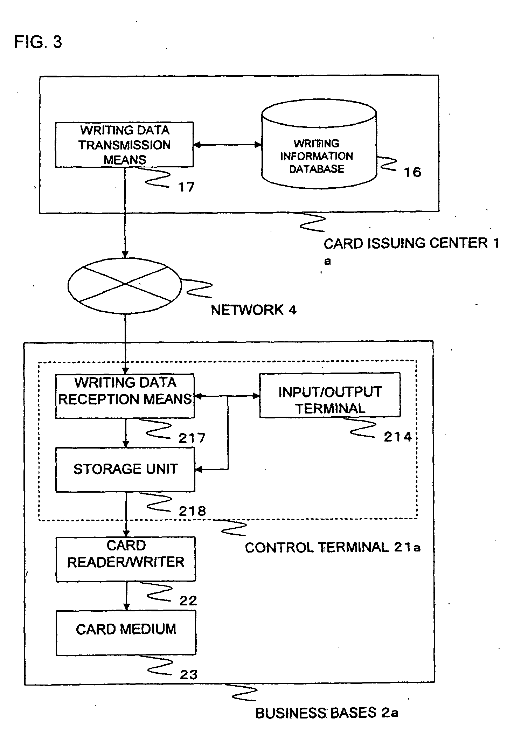

Conventionally, when IC cards are issued in business bases, as shown in Fig. 3, in a control terminal 21a of business base 2a, a writing data reception means 217 receives data to be written into IC cards from a writing data transmission means 17 of a card issuing center 1a via a network 4. In another manner, an input/output terminal 214 directly inputs data, and after the data are temporarily stored in a storage means 218 such as a hard disc of the control terminal 21a, the data are transmitted from the storage means 218 to a card reader/writer 22 so as to be written on a card medium 23. The IC cards are issued in such a manner according to the above two steps.

When, however, IC cards are issued in the card issuing system of Japanese Patent Laid-Open Publication No. 2001-266076 and conventional card issuing systems, since the business bases particularly along streets are in open places, terminals into which specific information and personal information are stored are susceptible to be stolen and abuse of them involved by the stealing possibly occurs. A reciprocal monitoring function is not sufficiently fulfilled because the number of operators in charge of the issuing process in each business base is small, and a risk of leakage of the specific information and the personal information in the business bases is high. For this reason, it is currently difficult for the customers to feel safe in utilizing the issuing systems in business bases.

### DISCLOSURE OF THE INVENTION

In light of the above problems, the inventors devised a card issuing system and a card issuing method which can issue IC cards, on which specific information and personal information are written, in real time with customers' sense of safety and security being secured even in business bases in any security environments without requiring the two steps of storing writing data and writing the stored writing data into IC cards in conventional issuing system.

The invention described in claim 1 is a card issuing system comprising a card issuing center for storing card writing data including specific information such as a card number and/or personal information prepared based on a request for IC card application from a customer, and a base for receiving the card writing data from the card issuing center via a network, writing them into the IC card and issuing the IC card, wherein the card issuing center has a center communication means for transmitting the customer' s card writing data to the base via the network, and the base has a card communication mediate means for receiving the card writing data from the center communication means and transmitting the card writing data to the IC card connected to a terminal without storing them in the terminal of the base, thereby securing security of the specific information and/or the personal information included in the card writing data.

The invention described in claim 2 is a card issuing system comprising a card issuing center for storing card writing data including specific information such as a card number and/or personal information prepared based on a request for IC card application from a customer, wherein the card issuing system has a center communication means for transmitting the customer's card writing data to a base via a network, and receiving a result of writing the card writing data into the IC card in the base from the base via the network, and wherein the card writing data are transmitted to the base securely by communication with the base.

The invention described in claim 5 is a card issuing system comprising a base for writing card writing data including specific information such as a customer's card number and/or personal information into an IC card and issuing the IC card to the customer, wherein a terminal has a card communication mediate means for receiving the customer's card writing data from a card issuing center via a network, transmitting the customer's card writing data to the IC card connected to the terminal without storing the card writing data in the terminal in the base, and transmitting a result of writing into the IC card to the card issuing center via the network, and wherein the card writing data are received from the card issuing center securely by communication with the card issuing center.

The invention described in claim 9 is a card issuing method which is used by a card issuing center for storing card writing data including specific information such as a card number and/or personal information prepared based on a request for IC card application from a customer, and a base for receiving the card writing data from the card issuing center via a network and writing them into the IC card so as to issue the IC card, wherein the card issuing center transmits the customer's card writing data to the base via a network, the base receives the card writing data from the card issuing center and transmitting them to the IC card connected to a terminal without storing the card writing data in the terminal in the base, thereby securing security of the specific information and/or the personal information included in the card writing data.

The invention described in claim 10 is a card issuing method which is used by a card issuing center for storing card writing data including specific information such as a card number and/or personal information prepared based on a request for IC card application from a customer, wherein the customer's card writing data are transmitted to a base via a network, and a result of writing the card writing data into an IC card in the base is received from the base via the network, the card writing data are transmitted to the base securely by communication with the base.

The invention described in claim 13 is a card issuing method which is used by a base for writing card writing data including specific information such as a customer's card number and/or personal information into an IC card so as to issue the IC card to the customer, wherein the customer's card writing data are received from a card issuing center via a network and are transmitted to the IC card connected to a terminal without storing the data in the terminal in the base, and a result of writing into the IC card is transmitted to the card issuing center via the network, and wherein the card writing data are received from the card issuing center securely by communication with the card issuing center.

According to the inventions described in claims 1, 2, 5, 9, 10 and 13, a step and a means that store the card writing data into the terminal are deleted from the conventional two card writing steps, so that the data can be written directly into the IC card in the base. For this reason, the security of the specific information such as a card number and the personal information is secured in the bases, and the IC card can be issued in real time.

The invention described in claim 3 is a card issuing system having in the card issuing center a log management database for storing a communication result such that the card writing data have been transmitted from the card issuing center to the base and for receiving the card writing data, and for receiving the result of writing into the IC card from the base so as to store it.

The invention described in claim 11 is a card issuing method, wherein a communication result such that the card writing data have been transmitted from the card issuing center to the base is stored in a log management database in the card issuing center, the card writing data are received, and a result of writing into the IC card is received from the base so as to be stored in the log management database.

According to the inventions described in claims 3 and 11, the communication result between the card issuing center and the base can be managed, and the data can be written into the IC card securely.

The invention described in claim 4 is a card issuing system, wherein the card issuing center has a control terminal authentication means for determining availability of an access to the card issuing center from the terminal in the base based on a control terminal authentication database in which authentication information specific to the terminal is stored.

The invention described in claim 12 is a card issuing method, wherein availability of an access to the card issuing center from a terminal in the base is determined based on a control terminal authentication database in which authentication information specific to the terminal is stored.

According to the inventions described in claims 4 and 12, an unauthenticated access to the card issuing center is prevented, and the IC card can be issued securely only in the authenticated bases.

The invention described in claim 6 is a card issuing system, wherein the terminal has a reader/writer, authentication means for determining availability of an access to the terminal from a card reader/writer for writing the card writing data into the IC card based on a reader/writer authentication database into which authentication information specific to the card reader/writer is stored.

The invention described in claim 14 is a card issuing method, wherein the availability of an access to the terminal from a card reader/writer for writing the card writing data into the IC card is determined based on a reader/writer authentication database in which authentication information specific to the card reader/writer is stored.

According to the inventions described in claims 6 and 14, the use of an unauthenticated card reader/writer can be prevented, and the authenticated card reader/writer can carry out the writing into the IC card securely.

The invention described in claim 7 is a card issuing system, wherein the IC card is determined as authenticated or unauthenticated by using a key which is the same as an access key stored in the IC card.

The invention described in claim 15 is a card issuing method, wherein the IC card is determined as being authenticated or unauthenticated using a key which is the same as an access key stored in the IC card.

According to the inventions described in claims 7 and 15, the writing of data into an unauthenticated IC card can be prevented, and the writing into an authenticated IC card can be carried out securely.

The invention described in claim 8 is a card issuing system, wherein a new IC card is issued to a customer or personal information and application programs in an issued IC card are rewritten in the base.

The invention described in claim 16 is a card issuing method, wherein a new IC card is issued to a customer or personal information and application programs in an issued IC card are rewritten in the base.

According to the inventions described in claims 18 and 16, not only the process for issuing a new IC card but also the process for rewriting IC card can be executed in real time in the bases while the security is being secured.

### DESCRIPTION OF REFERENCE NUMERALS

- 1:: card issuing center
- 11:: center communication means
- 12:: control terminal authentication means
- 13:: control terminal authentication database
- 14:: writing data encryption means
- 15:: cryptography key database
- 16:: writing information database
- 17:: writing data transmission means
- 18:: log management database
- 2:: business base
- 21:: control terminal
- 211:: card communication mediate means
- 212:: cipher decoding means
- 213:: key information database
- 214:: input/output terminal
- 215:: reader/writer authentication means
- 216:: reader/writer authentication database
- 217:: writing data reception means
- 218:: storage means
- 22:: card reader/writer
- 23:: card medium
- 3:: dedicated line
- 4:: network

### BRIEF DESCRIPTION OF THE DRAWINGS

FIG. 1 is a diagram illustrating one example of a system configuration of a card issuing system according to the invention;
FIG. 2 is a flowchart diagram illustrating one example of a flow of a card issuing method according to the invention; and
FIG. 3 is a diagram illustrating one example of a system configuration of a conventional card issuing system;

### BEST MODE FOR CARRYING OUT THE INVENTION

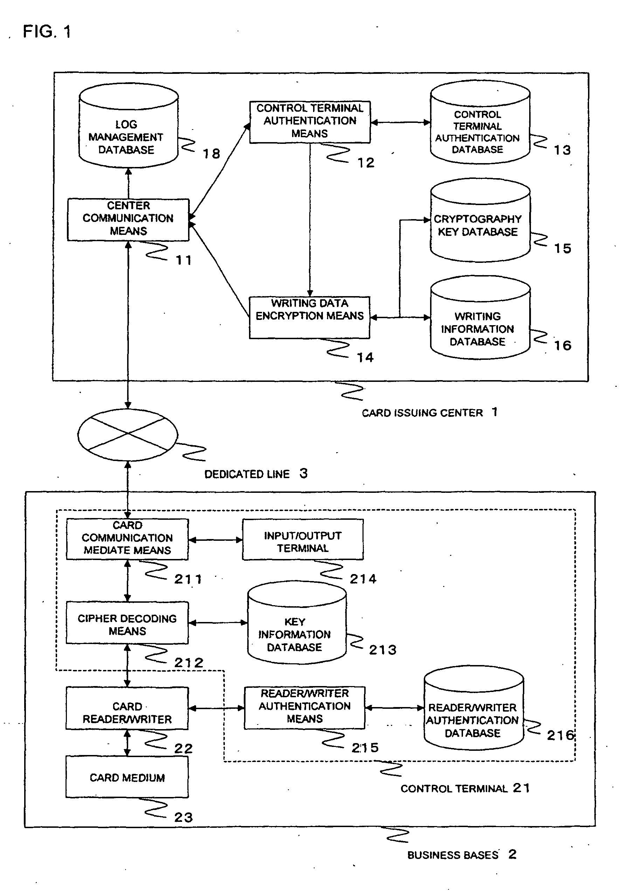

One example of an embodiment of the invention is explained in detail with reference to the drawings. Fig. 1 illustrates one example of a system configuration of a card issuing center 1 and a business base 2 composing a card issuing system of the invention.

In the card issuing system, a card issuing center 1 of a service providing business entity such as a card company in a high-security environment communicates with a business base 2 of the service providing business entity in a comparatively low-security environment via a dedicated line 3, and IC cards (hereinafter cards) of customers are issued in the business base 2. The business bases 2 are opened in all corners of the country and functions as a counter for the customers, and it includes branch offices and subcompanies of the service providing business entity, and may include not only offices along streets but also offices in department stores and in station yards.

The dedicated line 3 is a line such as a telephone line which disables leakage to a third party and is particularly allocated to the service business entity. The use of the dedicated line 3 secures the security of various information held by the card issuing center 1 and enables the card issuing in respective places such as the business bases 2 without questioning the need for the security environment of the business bases 2 in various places.

Hereinafter, the case which uses the dedicated line 3 is explained, but a network line where a leakage to a third part is difficult, a network line where decryption of various information using encryption techniques by the third party is impossible, and the like may be used instead of the dedicated line 3. Further, it is not necessary to always use one network for a case where a card writing result is received from the business base 2, mentioned later, and for a case where card writing data are transmitted from the card issuing center 1 to the business base 2.

A system configuration of the card issuing center 1 is explained. The card issuing center 1 has a center communication means 11, a control terminal authentication means 12, a control terminal authentication database 13, a writing data encryption means 14, a cryptography key database 15, a writing information database 16, and a log management database 18.

The center communication means 11 is a means that communicates with a computer terminal which is called as a control terminal 21 of the business base 2 via the dedicated line 3. The center communication means 11 transmits/receives data for authenticating the control terminal 21 of the business base 2, transmits encrypted data to be written into a card to the business base 2, and receives a card writing result from the business base 2, as mentioned later. Communication records between the center communication means 11 and a communication mediate means 211 in the control terminal 21 are sequentially stored in the log management database 18 in the card issuing center 1.

The control terminal authentication means 12 is a means that authenticates the control terminal 21 of the business base 2. An IP address is allocated to the control terminal 21 of the business base 2, and the control terminal authentication means 12 authenticates only the control terminal 21 which accesses the card issuing center 1 via the dedicated line 3.

The control terminal authentication database 13 is a database for storing IP address of each control terminal 21 therein. Even if the control terminal 21 is stolen, when an access is made to the control terminal 21 not via the dedicated line 3 without using its IP address, the access is regarded as unauthenticated access by the card issuing center 1 and is rejected. Since a plurality of the dedicated lines 3 are provided and they are constantly connected to the card issuing center 1, they can quickly respond to accesses from a plurality of the business bases 2.

The writing data encryption means 14 stores writing data such as personal information, specific information such as card numbers, and application programs, which should be written into a customer's card whose examination based on application for admission of a card and contents of the application for admission is completed and who waits for issuance, into the writing information database 16. The writing data encryption means 14 encrypts the writing data according to a cryptography key stored in the cryptography key database 15 when the business base 2 requests card issuance.

The personal information includes not only basic information such as names but also setting of credit, credit line, and points which are necessary for each application program (for example, an application for credit, an application for point system).

The application programs are already written into cards before shipment from the card manufacturing factory, or after the cards are delivered from the card manufacturing factory to the card issuing center 1, the application programs are written in the card issuing center 1 so as to be sent to the business base 2.

A system configuration of the business base 2 is explained below. The business base 2 has the control terminal 21 and a card reader/writer 22.

The control terminal 21 is a computer terminal which has the card communication mediate means 211, an input/output terminal 214, a cipher decoding means 212, a key information database 213, a reader/writer authentication means 215, and a reader/writer authentication database 216. The control terminal 21 of the present invention is characterized in that it does not have a storage means 218 unlike a conventional control terminal 21a (see Fig. 3).

The card communication mediate means 211 is a means that accesses to the card issuing center 1 using an IP address specific to each control terminal 21 via the dedicated line 3. The card communication mediate means 211 receives the data to be written into the card from the card issuing center 1, and transmits them to the card reader/writer 22, mentioned later, so as to mediate between the card issuing center 1 and a card medium 23. The card communication mediate means 211 requests an access to the card issuing center 1, requests the card issuing for specific customers using an input terminal such as a keyboard of the input/output terminal 214, and displays outputs of issuing results and instructions from the card issuing center 1 using an output terminal such as a display or a printer.

The cipher decoding means 212 decodes the encrypted writing data received from the card issuing center 1 using a cryptography key stored in the key information database 213 (the cryptography key is paired with the cryptography key stored in the cryptography key database 15 of the card issuing center 1). The cipher decoding means 212 enables an access to the card medium 23 using an access key stored in the key information database 213 which is similar to an access key previously stored in the card medium 23 which is inserted into the card reader/writer 22 and in a state of factory shipment and into which a part of the writing data such as the application programs is written. The cipher decoding means 212, then, again encrypts the writing data which are once decoded using the cryptography key for writing into the card.

The key information database 213 and the cipher decoding means 212 are put into a black box, and even if the control terminal 21 is stolen, it is difficult to read the key information from the key information database 213. Further, personal information is not stored in the control terminal 21, and thus the personal information cannot leak.

In the case where an unauthenticated card is inserted into the card reader/writer 22, mentioned later, and writing data are tried to be written into that card, the access from the unauthenticated card is rejected at this time because writing is carried but only into a card containing the same key as the access key stored in the key information database 213. This means that the key information itself is useless.

The encryption and decoding process by means of the cipher decoding means 212 and the key information database 213 is not necessarily owned by the control terminal 21 of the business bases 2. The writing data encrypted by the cryptography key for writing is firstly transmitted to the card communication mediate means 211 of the control terminal 21 in the writing data encryption means 14 in the card issuing center 1. The card issuing center 1 accesses to the card medium 23 using the access key held by the cryptography key database 15 in the card issuing center 1, so that the writing data may be directly written into the card medium 23. In this case, the card communication mediate means 211 of the control terminal 21 simplymediates between the card issuing center 1 and the card medium 23.

When the card reader/writer 22, mentioned later, is connected to the control terminal 21, a reader/writer authentication means 215 authenticates the card reader/writer 22. That is to say, an improper card reader/writer 22 cannot be used for writing and reading into/from a card. The reader/writer authentication means 215 authenticates the card reader/writer 22 based on specific authentication information stored in a reader/writer authentication database 216, and rejects the access from the unauthenticated card reader/writer 22.

The card medium 23, which is in the state of factory shipment or into which a part of writing data such as application programs is written in the card issuing center 1, is inserted into the card reader/writer 22, and the cipher decoding means 212 enables an access to the card medium 23. Thereafter, the card reader/writer 22 transmits the writing data received from the card issuing center 1 via the card communication mediate means 211 directly to the card medium 23 so as to write the writing data in real time. The card reader/writer 22 which is previously authenticated by the reader/writer authentication means 215 of the control terminal 21 can be used.

Further, the card reader/writer 22 reads as to whether the writing data are written into the card medium 23 from the card medium 23, and transmits it to the center communication means 11 via the card communication mediate means 211. As a result, this state is as though the card issuing center 1 directly communicates with the card, and even if improper data are written into the card, the card issuing center 1 receives communication results as needed so that a check can be made whether the data are improper.

Further, since the writing data including personal information are not stored in the business base 2, the conventional storage and writing steps are not required, and thus the security is secured and the card can be issued in the business base 2 in real time. The card reader/writer 22 is not particularly limited as long as it is a means that can write data into cards and read data from the cards.

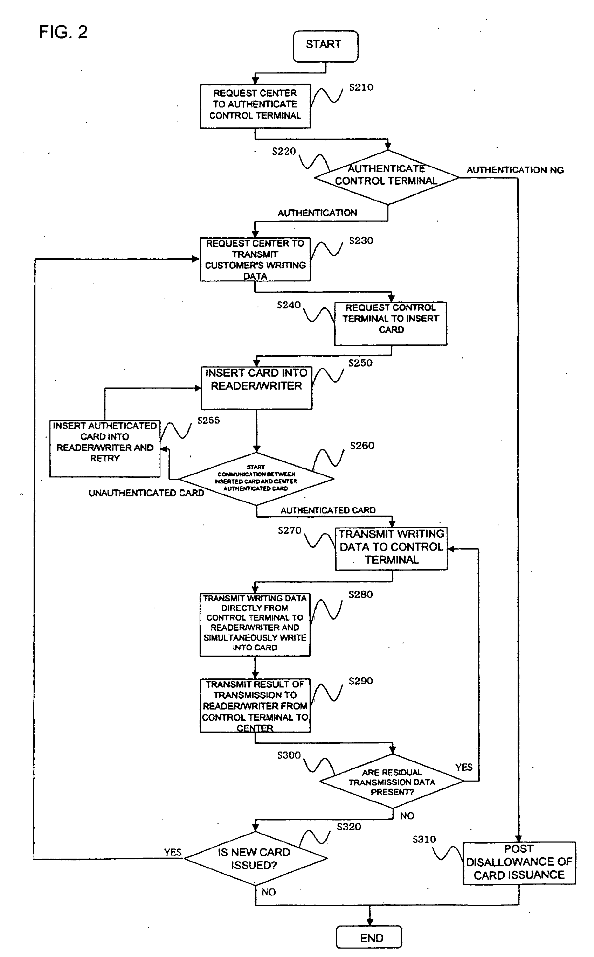

One example of a flow of the process according to the invention is explained below in detail with reference to a flowchart of Fig. 2 and the system configuration diagram of Fig. 1. In this embodiment, the case where a customer goes to the business base 2 and requests the issuing of a card is explained. The customer, however, already makes an application for admission for the issuing of card in the business base 2 or the card issuing center 1 using FAX, telephone or e-mail, the customer is screened for the admission, and writing data for writing into a card to be issued to the customer are stored in the writing information database 16 in the card issuing center 1.

In the control terminal 21 of the business base 2, the card communication mediate means 211 requests to the center communication means 11 in the card issuing center 1 for an access via the dedicated line 3 (S210).

The center communicationmeans 11 receives the access request from the control terminal 21, and the control terminal authentication means 12 checks whether a matched IP address is present in the control terminal authentication database 13 using an IP address specific in the control terminal 21 and accessed dedicated line numbers. The center communication means 11 allows the access of the control terminal 21 (S220) . In the case of unauthenticated access where the IP addresses are different or the access is not via the dedicate line 3, the access is not allowed, and the center communication means 11 notifies the control terminal 21 of the impossibility of the card issuance (S310).

The control terminal 21 which is allowed to access transmits a request of customer's writing data from the card communication mediate means 211 to the center communication means 11 (S230). For example, an ID and a password of the customer for whom a card is to be issued are input and are transmitted from the input/output terminal 214.

The center communication means 11 connects the card reader/writer 22 of the business bases 2 to the control terminal 21, and requests the card communication mediate means 211 to insert the card into the.card reader/writer 22 (S240). Every communication between the center communication means 11 and the card communication mediate means 211 is displayed on the input/output terminal 214 in real time.

The card communication mediate means 211 receives the card insertion request, and connects the card reader/writer 22 to the control terminal 21, so as to further insert the card medium 23 (S250). The card reader/writer 22 is authenticated by the reader/writer authentication means 215 of the control terminal 21 as a proper card reader/writer which is allowed to be connected.

The inserted card medium 23 starts to communicate with the card issuing center 1 (S260). The cipher decoding means 21 in the control terminal 21 accesses to the card medium 23 using the access key in the key information database 213 similar to the access key stored in the card medium 23. An authenticated card can be discriminated by that the access key is not present or the card contains a key which is different from the access key stored in the key information database 213. In the case of an improper card or a defective card where a chip is broken, an authenticated card is inserted into the card reader/writer 22, so that the access is again tried (S255).

When the center communication means 11 receives the insertion of the car medium 23 and the inserted card medium 23 being authenticated from the card communication mediate means 211, the writing data encryption means 14 encrypts the writing data of the customer stored in the writing information database 16 so as to transmit the encrypted writing data (S270).

The card communication mediate means 211 receives the encrypted writing data, and the cipher decoding means 212 decodes the writing data according to a decoding key in the key information database 213 which is pared with the cryptography key encrypted in the card issuing center 1. The writing data are encrypted by using the cryptography key which is necessary for writing the writing data into the card medium 23, and are transmitted to the card reader/writer 22, so as to be written into the inserted card medium 23 (S280) . At this time, the writing data are not stored in the control terminal 21 and the card reader/writer 22, and the writing data are subjected to the encrypting/decoding process and are written into the card medium 23 in real time.

The result of the transmission to the card reader/writer 22 and the the availability of writing into the card medium 23 are transmitted from the card communication mediate means 211 to the center communication means 11 (S290) . When the writing cannot be carried out, the center communication means 11 receives the impossibility of writing, and again transmits the writing data.

It is desirable that histories of the communication results of both the center communication means 11 and the card communication mediate means 211 are sequentially stored in the log management database 18 in the card issuing center 1. If troubles such as cutoff of a power source during the communication occur and the impossibility of access is caused, the original state can be recovered. When unauthenticated data are written into the card, the unauthenticated data can be discriminated in the card issuing center 1 based on the communication result in the log management database 18.

When writing data still remain in the writing information database 16, a check is made that a result such that the writing data previously transmitted are written into the card medium 23 securely is received from the card communication mediate means 211. Thereafter, nextwriting data are transmitted from the center communication means 11 to the card communication mediate means 211 (S300). In the case of the final writing data, the writing data, to which a graph or the like which clarifies that they are the final data is attached, are transmitted.

The writing data received by the card communication mediate means 211 are written into the card medium 23 at the steps similar to S280 and S290. When the final writing data are received, the access is ended by using the access key, so that a process for ending the writing into the card medium 23 is executed by the card reader/writer 22 and proper end of the card writing is transmitted from the card communication mediate means 211 to the center communication means 11.

When a card of another customer is issued, the sequence returns to S230, and the communication is made between the card issuing center 1 and the control terminal 21 according to the similar procedure (S320).

The writing data are not stored in the control terminal 21 of the business base 2, and the control terminal 21 directly functions as mediation between the card issuing center 1 and the cards. As a result, the security of the specific information and the personal information is secured and the card can be issued in real time. For this reason, cards can be issued to customers who are in a hurry at counters of airports, railway stations and department stores, and the card issuing service can be entrusted to companies other than the card company.

In the card issuing system of the invention, besides the issuing of a new card explained in this embodiment, writing data (personal information or application program) can be rewritten into an issued card. In this case, the rewriting operation is completed only by customer's visiting the nearest business base 2 as long as the writing data are stored in the card issuing center 1.

The functions of the respective means and the databases in the invention are only logically discriminated, and thus they may compose the same area physically or factually. It is needless to say that the databases may be replaced by data files, and the description of the databases includes data files.

In order to carry out the invention, a storage medium into which programs of softwares realizing the functions of the embodiment are recorded is supplied to the system, and a computer in the system reads so as to execute the programs stored in the storage medium.

In this case, the programs read from the recording medium realize the functions of the embodiment, and the storage medium which stores the programs therein composes the invention.

Examples of the storage medium for supplying the programs are a magnetic disc, a hard disc, an optical disc, a magneto-optical disc, a magnetic tape, and a nonvolatile memory card.

When the programs read by the computer are executed, the functions of the embodiment are realized, and also an operating system or the like which runs on the computer executes a part or all of the actual process based on instructions of the programs, so that the functions of the embodiment are realized by the process. The invention also includes this case.

### INDUSTRIAL APPLICABILITY

According to the invention, a customer can request the card issuance with a sense of security in respective business bases in any security environments, and this enhances wide spread of IC cards.

Since IC cards can be issued in real time according to requests from customers, the IC cards can be issued not only in the business bases of a card company but also at counters of airports, railway stations and department stores. This system is convenient for customers who are in a hurry.

Since information to be written into IC cards are not stored in business bases, the information is never leaked to clerks in the business bases and third parties, and companies other than the card company can take care of the card issuance.

The invention is effective for not only the issuing of new cards but also for rewriting and changing personal information and application programs written into IC cards already issued. The rewriting of cards is possible in the business bases as long as the writing data are stored in the card issuing center, and thus it is not necessary to rewrite in the card issuing center. For this reason, the time and the transport cost can be reduced.

## Claims

1. A card issuing system comprising a card issuing center for storing card writing data including specific information such as a card number and/or personal information prepared based on a request for IC card application from a customer, and a base for receiving the card writing data from the card issuing center via a network, writing them into the IC card and issuing the IC card, wherein
the card issuing center has a center communication means for transmitting the customer's card writing data to the bases via the network, and
the base has a card communication mediate means for receiving the card writing data from the center communication means and transmitting the card writing data to the IC card connected to a terminal without storing them in the terminal of the base,
thereby securing security of the specific information and/or the personal information included in the card writing data.

2. A card issuing system comprising a card issuing center for storing card writing data including specific information such as a card number and/or personal information prepared based on a request for IC card application from a customer,:
wherein the card issuing system has a center communication means for transmitting the customer's card writing data to a base via a network, and receiving a result of writing the card writing data into the IC card in the base from the base via the network, and
wherein the card writing data are transmitted to the base securely by communication with the base.

3. The card issuing system according to claim 1 or 2, wherein the card issuing system has in the card issuing center a log management database
for storing a communication result such that the card writing data have been transmitted from the card issuing center to the base, and
for receiving the card writing data and for receiving the result of writing into the IC card from the base so as to store it.

4. The card issuing system according to any one of claims 1 to 3, wherein the card issuing system has in the card issuing center a control terminal authentication means for determining availability of an access to the card issuing center from the terminal in the base based on a control terminal authentication database in which authentication information specific to the terminal is stored.

5. A card issuing system comprising a base for writing card writing data including specific information such as a customer's card number and/or personal information into an IC card and issuing the IC card to the customer, wherein
a terminal has a card communication mediate means for receiving the customer's card writing data from a card issuing center via a network, transmitting the customer's card writing data to the IC card connected to the terminal without storing the card writing data in the terminal in the base, and transmitting a result of writing into the IC card to the card issuing center via the network, and
the card writing data are received from the card issuing center securely by communication with the card issuing center.

6. The card issuing system according to claim 1 or 5, wherein the terminal has a reader/writer authentication means for determining availability of an access to the terminal from a card reader/writer for writing the card writing data into the IC card based on a reader/writer authentication database into which authentication information specific to the card reader/writer is stored.

7. The card issuing system according to any one of claims 1 to 6, wherein the IC card is determined as authenticated or unauthenticated by using a key which is the same as an access key stored in the IC card.

8. The card issuing system according to any one of claims 1 to 7, wherein a new IC card is issued to a customer or personal information and application programs in an issued IC card are rewritten in the base.

9. A card issuing method which is used by a card issuing center for storing card writing data including specific information such as a card number and/or personal information prepared based on a request for IC card application from a customer, and a base for receiving the card writing data from the card issuing center via a network and writing them into the IC card so as to issue the IC card, wherein
the card issuing center transmits the customer's card writing data to the base via a network, and
the base receives the card writing data from the card issuing center and transmitting them to the IC card connected to a terminal without storing the card writing data in the terminal in the base,
thereby securing security of the specific information and/or the personal information included in the card writing data.

10. A card issuing method which is used by a card issuing center for storing card writing data including specific information such as a card number and/or personal information prepared based on a request for IC card application from a customer, wherein
the customer's card writing data are transmitted to a base via a network, and a result of writing the card writing data into an IC card in the base is received from the base via the network, and
the card writing data are transmitted to the base securely by communication with the base.

11. The card issuing method according to claim 9 or 10, wherein
a communication result such that the card writing data have been transmitted from the card issuing center to the bases is stored in a log management database in the card issuing center, and
the card writing data are received, and a result of writing into the IC card is received from the base so as to be stored in the log management database.

12. The card issuing method according to any one of claims 9 to 11, wherein availability of an access to the card issuing center from a terminal in the base is determined based on a control terminal authentication database in which authentication information specific to the terminal is stored.

13. A card issuing method which is used by a base for writing card writing data including specific information such as a customer's card number and/or personal information into an IC card so as to issue the IC card to the customer, wherein
the customer's card writing data are received from a card issuing center via a network and are transmitted to the IC card connected to a terminal without storing the data in the terminal in the base, and a result of writing into the IC card is transmitted to the card issuing center via the network, and
the card writing data are received from the card issuing center securely by communication with the card issuing center.

14. The card issuing method according to claim 9 or 13, wherein the availability of an access to the terminal from a card reader/writer for writing the card writing data into the IC card is determined based on a reader/writer authentication database in which authentication information specific to the card reader/writer is stored.

15. The card issuing method according to any one of claims 9 to 14, wherein the IC card is determined as being authenticated or unauthenticated using a key which is the same as an access key stored in the IC card.

16. The card issuing method according to any one of claims 9 to 15, wherein a new IC card is issued to a customer or personal information and application programs in an issued IC card are rewritten in the base.
